# EUROPÄISCHE PATENTSCHRIFT

(11) **EP 3 807 135 B1**
(45) Veröffentlichungstag und Bekanntmachung des Hinweises auf die Patenterteilung: **08.02.2023**
(21) Anmeldenummer: 19736592.7
(22) Anmeldetag: 11.06.2019
(51) Int. Cl.: B60T 15/04, B60T 17/22, B60T 13/38

(54) **BEDIENUNGSSICHERES PARKVENTIL**
OPERATIONALLY RELIABLE PARKING VALVE
SOUPAPE DE STATIONNEMENT FIABLE

(30) Priorität: 13.06.2018 DE 102018209479
(43) Veröffentlichungstag der Anmeldung: 21.04.2021
(73) Patentinhaber: KNORR-BREMSE Systeme für Nutzfahrzeuge GmbH, 80809 München (DE)
(72) Erfinder: KONCZ, Laszlo, 6000 Kecskemét (HU)
(86) Internationale Anmeldenummer: PCT/EP2019/065163
(87) Internationale Veröffentlichungsnummer: WO 2019/238651

(56) Entgegenhaltungen:
- EP-A1- 1 386 810
- EP-A1- 1 512 600
- EP-A1- 3 228 512
- EP-A2- 1 132 275
- EP-A2- 2 218 617
- EP-B1- 1 386 810
- EP-B2- 1 132 275
- WO-A1-2018/006991
- DE-A1-102016 008 215
- GB-A- 1 017 817

## Beschreibung

Die Erfindung betrifft ein Parkventil für die manuelle Betätigung einer Federspeicher-Feststellbremse eines Anhängers.

Ein solches Parkventil ermöglicht es in einer Stellung "Parken", Druckluft aus einer Lösekammer eines Bremszylinders einer Federspeicher-Feststellbremse abzulassen, um durch einen federbelasteten Kolben die Bremse anzulegen. Anschließend kann durch das Parkventil in der Stellung "Fahren" die Bremse wieder gelöst werden, indem die Lösekammer wieder mit Druckluft aus einem Druckspeicher gefüllt wird, wodurch der Kolben entgegen der Federbelastung wieder zurück in seine ursprüngliche Position geführt wird, so dass die Bremse gelöst wird.

Derartige Parkventile weisen in der Regel einen Schieber zur manuellen Betätigung auf, der mittels Dichtungen auf seinem Umfang innerhalb eines Gehäuses des Parkventils die entsprechenden Verbindungen zur Lösekammer herstellt. Der Schieber muss dabei durch einen Bediener sicher in die Stellungen "Fahren" bzw. "Parken", welche insbesondere dessen Endstellungen darstellen, überführt werden können, wobei Zwitterstellungen vermieden werden sollen. Eine Zwitterstellung ist dabei durch eine Stellung des Schiebers definiert, in der keine klare Unterscheidung zwischen beiden Stellungen möglich ist und somit beispielsweise die Lösekammer während der Fahrt entlüftet werden kann, was ein Anlegen der Bremse während der Fahrt zur Folge hätte.

Um diese sicherheitskritischen Zwitterstellungen zu vermeiden sind Parkventile bekannt, die den Schieber auf einer Teilstrecke seiner zu durchfahrenden Gesamtstrecke mit einer Gegenkraft beaufschlagen, um einem Bediener eine Kraftschwelle entgegenzusetzen, die er zu überwinden hat. Hat der Bediener die Kraftschwelle überwunden, so wird der Schieber, da der Bediener seine Betätigungskraft nicht schnell genug reduzieren kann, in die entsprechende Endstellung überführt. Die Überwindung der Kraftschwelle garantiert somit eine sichere Bedienung des Parkventils.

Eine derartige Kraftschwelle ist üblicherweise durch ein Reibglied realisiert, das auf der entsprechenden Teilstrecke mit einer korrespondierenden Gegenfläche mit erhöhter Reibung in Kontakt steht. Diese Ausführungsform der Kraftschwelle hat jedoch den Nachteil, dass, um einen bestimmten Kraftverlauf während der Verschiebung auf den Schieber darzustellen, ein relativ hoher konstruktiver Aufwand betrieben werden muss, der Reibglied und Gegenfläche aufeinander abstimmt. Zudem sind beide Elemente der Kraftschwelle durch den gegenseitigen Kontakt hoher Gleitreibung ausgesetzt, was wiederum zu Verschleiß dieser Elemente führt. Der Verschleiß kann im Extremfall die Gegenkraft auf den Schieber verändern, so dass diese, bei stark verschlissenem Reibglied oder stark verschlissener Gegenfläche, deutlich geringer ausfällt, wodurch die Bediensicherheit vermindert wird.

Ein Parkventil mit einer solchen Kraftschwelle ist in der EP 1 512 600 A1 gezeigt.

Es ist daher Aufgabe der vorliegenden Erfindung, ein Parkventil zur Verfügung zu stellen, das bediensicher und ohne die oben genannten Nachteile von einer Stellung in die andere Stellung überführt werden kann.

Diese Aufgabe wird durch den Gegenstand nach dem unabhängigen Anspruch gelöst. Vorteilhafte Weiterbildungen sind Gegenstand der Unteransprüche.

Erfindungsgemäß ist ein Parkventil, für die manuelle Betätigung einer Federspeicher-Feststellbremse, vorgesehen, aufweisend:
- ein Gehäuse mit einem Anschluss, der fluidisch mit einer Lösekammer eines Federspeicher-Bremszylinders verbunden werden kann, einem Anschluss, der fluidisch mit einem Vorratsluftbehälter verbunden werden kann, sowie einem Entlüftungsanschluss,
- einen Schieber, der zur manuellen Betätigung ausgebildet ist und entlang einer Gesamtstrecke zwischen zwei Endstellungen innerhalb des Gehäuses verschiebbar vorgesehen ist, wobei der Schieber dazu ausgebildet ist, Stellungen entlang der Gesamtstrecke einzunehmen, in denen aufgrund mindestens einer Dichtung keine fluidische Verbindung zwischen dem Anschluss zur Lösekammer und dem Entlüftungsanschluss besteht, und andere Stellungen entlang der Gesamtstrecke einzunehmen, in denen aufgrund der mindestens einen Dichtung keine fluidische Verbindung zwischen dem Anschluss der Lösekammer und dem Anschluss zum Vorratsluftbehälter besteht, gekennzeichnet durch
- eine Hemmvorrichtung, die dazu ausgebildet ist, den Schieber beim Verschieben zumindest entlang einer Teilstrecke der Gesamtstrecke in zumindest einer Richtung mit einer von der Position des Schiebers auf der Teilstrecke abhängigen veränderlichen Gegenkraft zu beaufschlagen.

Der Schieber ist vorzugsweise gleitend und/oder dichtend im Gehäuse vorgesehen. Vorzugsweise ist die Gegenkraft dabei kontinuierlich veränderlich ausgebildet. Darunter ist insbesondere zu verstehen, dass sich die Gegenkraft während des Verschiebens entlang der Teilstrecke verändert. Besonders bevorzugt ist sie über der Verschiebung nicht konstant.

Die Endstellungen des Schiebers weisen dabei vorzugsweise Anschläge, welche besonders bevorzugt innerhalb des Gehäuses ausgebildet sind, auf, mit denen der Schieber in Kontakt treten kann.

Nachfolgend wird zwischen den Begriffen "Teilstrecke" und "Streckenabschnitt" wie folgt unterschieden. Eine Teilstrecke stellt einen Teil der Gesamtstrecke dar, auf dem, wenn der Schieber diesen Teil durchfährt, auf den Schieber eine Kraft aus der Hemmvorrichtung entgegen seiner Bewegungsrichtung, also eine Gegenkraft, wirkt. Ein Streckenabschnitt stellt wiederum einen Teil der Gesamtstrecke dar, auf dem, wenn der Schieber diesen Teil durchfährt, auf den Schieber eine Kraft aus der Hemmvorrichtung in Richtung seiner Bewegung, also eine Unterstützungskraft, oder keine Kraft aus der Hemmvorrichtung wirkt. Somit ist die Wirkung der Hemmvorrichtung beim Durchfahren der Teilstrecke auf die weitere Bewegung des Schiebers hemmend, beim Durchfahren des Streckenabschnittes unterstützend oder zumindest neutral im Bezug die weitere Bewegung des Schiebers. Dabei können Teilstrecke und Streckenabschnitt aus nicht aneinander angrenzenden Teilen der Gesamtstrecke bestehen.

Vorzugsweise beinhaltet die Teilstrecke zumindest eine Endstellung des Schiebers. Dadurch wird sichergestellt, dass zumindest in einer Endstellung die Gegenkraft auf den Schieber wirkt, so dass ein Bediener schon während des Verschiebens aus der entsprechenden Endstellung heraus diese überwinden muss.

Vorzugsweise wird die Gegenkraft nicht aufgrund mechanischer Reibung zweier Komponenten aneinander erzeugt. Um den Verschleiß niedrig zu halten, oder vollständig zu vermeiden, ist eine Erzeugung der Gegenkraft auf andere Weise als mittels mechanischer Reibung vorgesehen. Vorzugsweise erfolgt die Erzeugung der Gegenkraft mittels magnetischer und/oder pneumatischer Kraft.

Vorzugsweise weist die Hemmvorrichtung eine Rastierung auf, die dazu ausgebildet ist, den Schieber zumindest in einer Stellung oder einem beschränkten Bereich der Gesamtstrecke zu halten. Somit wird die Bediensicherheit des Parkventils weiter erhöht, da sichergestellt ist, dass sich der Schieber nicht aus der rastierten Stellung heraus, welche bevorzugt zumindest eine Endstellung ist, durch Vibrationen oder Stöße während der Fahrt oder durch zufällige Berührungen des Schiebers bewegen kann. Die Rastierung ist dabei entweder separat, beispielsweise mittels reib- und/oder formschlüssig ineinander greifender Elemente, ausgeführt, oder mittels spezieller Ausprägung der Gegenkraft durch die Hemmvorrichtung ausgebildet. So kann beispielsweise die Haltekraft eines Magneten so stark gewählt werden, dass diese die Funktion einer Rastierung erfüllt. Ebenso kann eine Kraft auf den Schieber, welche mittels Unter- oder Überdruck erzeugt wird, derart hoch ausgebildet sein, dass die Funktion einer Rastierung erfüllt ist.

Vorzugsweise ist die mindestens eine Dichtung auf dem Schieber oder im Gehäuse vorgesehen. Die mindestens eine Dichtung ist dabei dazu ausgebildet, bei Verschiebung des Schiebers entlang der Gesamtstrecke mit einer Dichtfläche in Kontakt zu treten, um die Dichtwirkung herzustellen. Die Dichtfläche ist dabei vorzugsweise im Gehäuse und die mindestens eine Dichtung auf dem Schieber vorgesehen. Alternativ oder zusätzlich kann die Dichtfläche auf dem Schieber ausgebildet sein und die mindestens eine Dichtung ist im Gehäuse vorgesehen.

Vorzugsweise besteht die Teilstrecke aus mindestens zwei Abschnitten der Gesamtstrecke, die insbesondere nicht direkt aneinander angrenzen. Somit kann erreicht werden, dass ein Bediener an mehreren Positionen des Schiebers auf der Gesamtstrecke eine Gegenkraft erfährt. Vorzugsweise befindet sich zwischen den Abschnitten der Teilstrecke ein Bereich, auf dem der Schieber mit keiner Kraft oder einer Unterstützungskraft in Richtung der Verschiebung beaufschlagt wird.

Vorzugsweise weist die Gegenkraft auf den Schieber einen Maximalwert auf, der um mindestens 25%, vorzugsweise um mindestens 50% gegenüber einer Kraft erhöht ist, die der Schieber aufgrund seiner Bauart, insbesondere aufgrund der Reibung der mindestens einen Dichtung, bei einer Verschiebung erfährt. So ist sichergestellt, dass die Gegenkraft auf den Schieber durch den Bediener klar von einer Kraft unterschieden werden kann, die grundsätzlich bei der Verschiebung des Schiebers vorhanden ist. Für einen Bediener ist somit spürbar, ab wann bzw. ab welcher Position auf der Gesamtstrecke er die Kraftschwelle, welche zumindest durch den Maximalwert der Gegenkraft charakterisiert ist, überwunden hat.

Vorzugsweise ist die Hemmvorrichtung dazu ausgebildet, den Schieber über einen Streckenabschnitt der Gesamtstrecke, der nicht der Teilstrecke angehört, mit einer insbesondere von der Position des Schiebers auf dem Streckenabschnitt abhängigen Unterstützungskraft in Richtung der Verschiebung oder keiner Kraft zu beaufschlagen. Somit kann, wenn eine Unterstützungskraft auf den Schieber wirkt, vorteilhafterweise die Verschiebung des Schiebers in die Endstellung, die in Richtung der Verschiebung liegt, unterstützt werden, so dass die Wahrscheinlichkeit erhöht wird, dass der Schieber auch die entsprechende Endstellung erreicht.

Vorzugsweise ist die Unterstützungskraft dazu ausgebildet, eine Verschiebung des Schiebers in die Endstellung, die in Richtung der Verschiebung liegt, auch ohne manuelle Betätigung zu bewirken. Durch diese Ausbildung der Unterstützungskraft wird auch bei Wegfall der Betätigungskraft eines Bedieners auf den Schieber, beispielsweise weil dieser den Schieber unter der irrtümlichen Annahme losgelassen hat, er habe die gewünschte Endstellung bereits erreicht, der Schieber durch die Unterstützungskraft weiter bewegt, bis die Endstellung erreicht ist. Die Lage und Erstreckung des Streckenabschnitts auf dem die Unterstützungskraft auf den Schieber wirkt, ist vorzugsweise so gewählt, dass der Schieber stets auf seinem weiteren Verschiebeweg keine Zwitterstellung mehr durchlaufen muss.

Die Teilstrecke, auf der die Gegenkraft auf den Schieber wirkt, ist vorzugsweise in ihrer Position auf der Gesamtstrecke und in ihrer Erstreckung so gewählt, dass sie den Schieber mit einer Gegenkraft beaufschlagt, bis die entsprechende Dichtung die Mitte des Anschlusses der mit der Lösekammer verbindbar ist, erreicht hat. Vorzugsweise schließt sich daran der Streckenabschnitt an, auf dem auf den Schieber die Unterstützungskraft wirkt. Somit ist sichergestellt, dass Gegenkraft und Unterstützungskraft den Schieber stets weg von möglichen Zwitterstellungen drängen.

Vorzugsweise ist die Hemmvorrichtung dazu ausgebildet, dass sich die Gegenkraft und/oder die Unterstützungskraft von ihrem minimalen bis zu ihrem maximalen Wert über eine Strecke ausbildet, deren Länge insbesondere zumindest 2% der Gesamtstrecke, bevorzugt zumindest 5%, besonders bevorzugt zumindest 8% der Gesamtstrecke beträgt. Somit wird ein für das Empfinden des Bedieners plötzlicher Anstieg der Kräfte vermieden, so dass der Bediener beispielsweise nicht irrtümlicherweise auf das Erreichen einer Endstellung durch eine plötzlich auftretende Gegenkraft schließen kann. Die Gefahr einer Fehlbedienung wird dadurch weiter verringert.

Vorzugsweise ist die Hemmvorrichtung dazu ausgebildet, mittels magnetischer Kraft die Gegenkraft und/oder die Unterstützungskraft auf den Schieber auszuüben, wobei die Hemmvorrichtung insbesondere einen Magnet und ein Gegenstück, beispielsweise ein Gegenstück aus Stahl, das dazu ausgebildet ist, von dem Magneten angezogen zu werden, aufweist, wobei das Gegenstück insbesondere ein zweiter Magnet oder ein magnetisches Element ist. Eine derartige Ausbildung der Hemmvorrichtung bewirkt eine berührungslose Erzeugung der Gegenkraft und/oder der Unterstützungskraft, so dass ein langlebiges Konzept darstellbar ist. Die Gegenkraft wird dabei durch einen Bediener bei der Verschiebung des Schiebers aus der Endstellung zu überwinden sein, in der Magnet und Gegenstück minimal zueinander beabstandet sind. Die Unterstützungskraft erfährt der Schieber hingegen bei der Bewegung des Schiebers in Richtung der entsprechenden Endstellung in der Magnet und Gegenstück minimal zueinander beabstandet sind, wobei die Unterstützungskraft durch die magnetische Anziehungskraft hervorgerufen wird.

Vorzugsweise sind der Magnet auf oder in dem Schieber und das Gegenstück auf oder in dem Gehäuse oder der Magnet auf oder in dem Gehäuse und das Gegenstück auf oder in dem Schieber vorgesehen.

Vorzugsweise sind der Magnet und das Gegenstück so angeordnet, dass deren Anziehungskraft in einer Endstellung des Schiebers maximal zumindest gegenüber allen weiteren möglichen Stellungen des Schiebers wird.

Vorzugsweise weist die Hemmvorrichtung einen weiteren Magnet oder ein weiteres Gegenstück auf oder in dem Gehäuse oder auf oder in dem Schieber auf. Dieser weitere Magnet oder dieses weitere Gegenstück ist vorzugsweise so platziert, dass die magnetische Anziehungskraft in der anderen Endstellung des Schiebers ebenfalls maximal wird.

Es sind beispielsweise Ausführungen denkbar, in denen magnetische Anziehungskräfte auf den Schieber wirken, die den Schieber sowohl in die eine als auch in die andere Endstellung ziehen. Diese verändern sich mit der Position des Schiebers auf der Gesamtstrecke und werden mit dem jeweiligen Abstand zur entsprechenden Endstellung geringer. Auf der Gesamtstrecke gibt es zumindest eine Schieberstellung, in der sich beide Anziehungskräfte ausgleichen. Vor dem Erreichen dieser Stellung wirkte auf den Schieber in der Summe der Anziehungskräfte noch die Anziehungskraft entgegen seiner Verschiebungsrichtung. Nach Überschreiten dieser Stellung erfährt der Schieber nun in der Summe eine Unterstützungskraft, welche aus der nun stärker werdenden magnetischen Anziehungskraft der anderen Endstellung resultiert.

Im Einzelnen sind folgende bevorzugte Ausbildungen einer Hemmvorrichtung denkbar, die magnetische Kräfte in mindestens zwei Stellungen, insbesondere den Endstellungen, des Schiebers hervorruft:
Ein Gegenstück ortsfest mit dem Gehäuse verbunden, zwei Magnete entsprechend an zwei Positionen fest mit dem Schieber verbunden.

Ein Magnet ortsfest mit dem Gehäuse verbunden, zwei Gegenstücke entsprechend an zwei Positionen fest mit dem Schieber verbunden.

Zwei Gegenstücke ortsfest an zwei Positionen mit dem Gehäuse verbunden, ein Magnet entsprechend fest mit dem Schieber verbunden.

Zwei Magnete ortsfest an zwei Positionen mit dem Gehäuse verbunden, ein Gegenstück entsprechend fest mit dem Schieber verbunden.

Alternativ oder zusätzlich zu der Erzeugung der Kraft mittels Magnetismus ist in einer weiteren Ausführungsform der Erfindung die Erzeugung der Kraft durch die Hemmvorrichtung auf den Schieber auf weitere Arten möglich.

Daher ist die Hemmvorrichtung vorzugsweise dazu ausgebildet, den Schieber mit einer Gegenkraft und/oder einer Unterstützungskraft, die aus einem Unter- und/oder einem Überdruck gebildet wird, zu beaufschlagen. Vorzugsweise sind/ist der Schieber und/oder das Gehäuse als Teil der Hemmvorrichtung dazu ausgebildet, entsprechende Drücke zu erzeugen.

Vorzugsweise weist die Hemmvorrichtung eine Kammer auf, welche dazu ausgebildet ist, zumindest bei Verschiebung des Schiebers über die Teilstrecke hinweg durch den Schieber fluidisch verschlossen zu werden, wobei die Kammer dazu ausgebildet ist, ihr Volumen entsprechend der Verschiebung des Schiebers zu verändern. Die Kammer ist dabei vorzugsweise in einem Teil des Gehäuses des Parkventils ausgebildet.

Alternativ oder zusätzlich ist die Kammer zumindest teilweise in dem Schieber ausgebildet. Ist die Kammer zumindest teilweise in dem Schieber ausgebildet, so ist vorzugsweise ein Teil des Gehäuses dazu ausgebildet, die Kammer über die Teilstrecke hinweg fluidisch zu verschließen, indem vorzugsweise ein Vorsprung im Gehäuse ausgebildet ist.

Vorzugsweise erfolgt der Verschluss der Kammer mittels einer Dichtung des Schiebers und/oder des Gehäuses und/oder mittels separater, dazu ausgebildeter Elemente. Somit kann die Kammer vorteilhafterweise an einer Seite mit einem Ende des Schiebers verschlossen werden, was den konstruktiven Aufwand minimiert.

Die Dichtung des Schiebers und/oder des Gehäuses tritt dabei vorzugsweise mit einer Dichtfläche in Kontakt, welche vorzugsweise im Gehäuse und/oder auf dem Schieber vorgesehen ist.

Die Dichtung, die zum Verschluss der Kammer ausgebildet ist, kann mit der mindestens einen Dichtung, die zur Herstellung der fluidischen Verbindungen der einzelnen Anschluss ausgebildet ist, identisch sein, oder separat ausgebildet sein.

Vorzugsweise ist die Kammer beim Verschieben des Schiebers über die Teilstrecke und/oder über den Streckenabschnitt hinaus dazu ausgebildet, mit der Atmosphäre oder einer Entlüftungseinrichtung, insbesondere mit einer Ausgleichskammer, verbunden zu werden. Dazu sind vorzugsweise Ausgleichskanäle innerhalb des Gehäuses und/oder auf dem Schieber vorgesehen, die bei bestimmten Schieberstellungen einen Druckausgleich erlauben, indem sie die Kammer mit der Atmosphäre oder einer Entlüftungseinrichtung verbinden.

Die Ausgleichskanäle sind insbesondere als Nut und/oder Bohrung ausgeführt. Durch entsprechende Positionierung der Ausgleichskanäle auf der Gesamtstrecke und der entsprechenden Auswahl ihrer Erstreckung über die Gesamtstrecke kann der Fachmann einen gewünschten Kraftverlauf auf den Schieber hervorrufen.

Vorzugsweise ist die Kammer dazu ausgebildet, beim Verschieben des Schiebers über die Teilstrecke hinweg eine Volumenänderung von mindestens 5%, vorzugsweise mindestens 10% zu erfahren. So wird gewährleistet, dass eine Kraft auf den Schieber aus Unter- bzw. Überdruck auch für einen Bediener spürbar ist.

Die hier beschriebenen Ausführungsformen lassen sich in beliebiger Weise miteinander kombinieren, wodurch weitere Ausführungsformen erreichbar sind. Beispielsweise sind Ausführungsformen denkbar, die einen Schieber aufweisen, der sowohl durch magnetische als auch durch pneumatische Kräfte beaufschlagt ist, welche entsprechend der zuvor beschriebenen Ausführungsformen erzeugt werden.

Nachfolgend wird die Erfindung im Detail anhand der beigefügten Figuren näher erläutert. Es zeigen:
- Fig. 1: eine Außenansicht eines erfindungsgemäßen Parkventils,
- Fig. 2a-d: schematische Darstellungen, die das Funktionsprinzip des bedienungssicheren Parkventils anhand verschiedener Positionen des Schiebers darstellen,
- Fig. 3: eine Schnittansicht einer ersten Ausführungsform der Erfindung, wobei der Schieber sich in der Stellung "Parken" befindet,
- Fig. 4: eine Schnittansicht der ersten Ausführungsform der Erfindung, wobei der Schieber sich in der Stellung "Fahren" befindet,
- Fig. 5: eine Schnittansicht einer zweiten Ausführungsform der Erfindung, wobei der Schieber sich in der Stellung "Parken" befindet,
- Fig. 6: eine Schnittansicht der zweiten Ausführungsform der Erfindung, wobei der Schieber sich in der Stellung "Fahren" befindet.

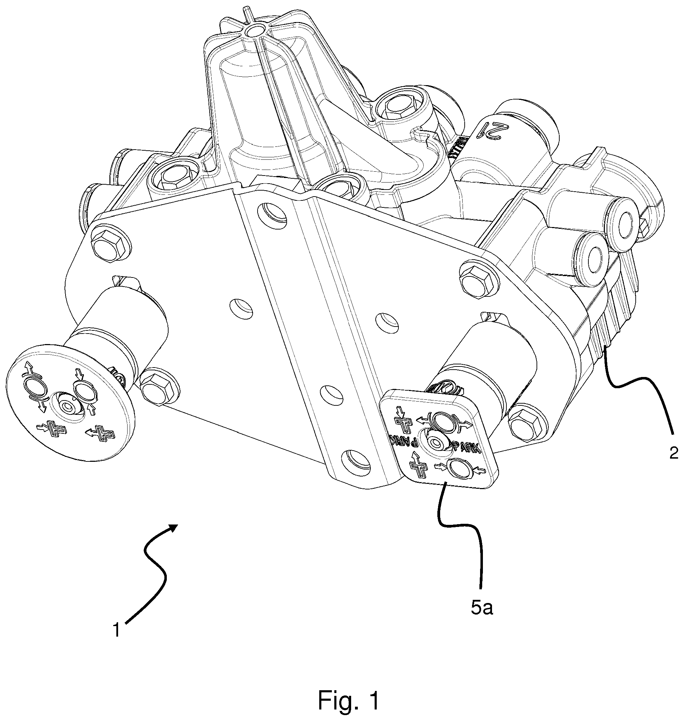

**Fig. 1** zeigt eine Außenansicht eines erfindungsgemäßen Parkventils 1 mit einem Gehäuse 2 und einem Schieberknopf 5a, der sich in der Stellung "Fahren" befindet. Dem Schieberknopf 5a schließt sich im Inneren des Gehäuses 2 ein Schieber 5 an, welcher durch den Schieberknopf 5a manuell betätigt werden kann.

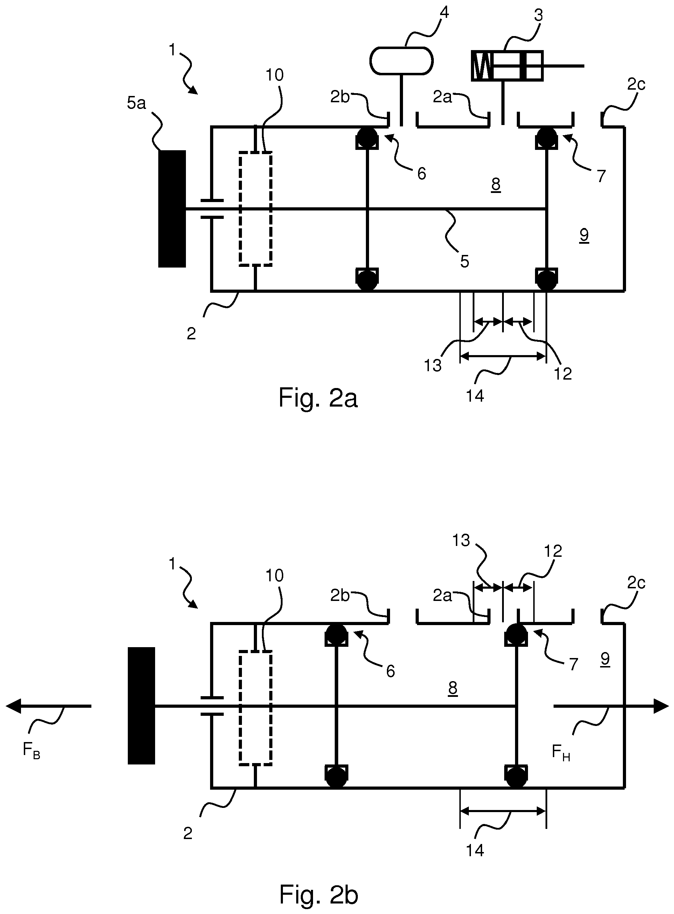

Die **Fig. 2a** bis **2d** erläutern das Funktionsprinzip des Parkventils 1 anhand verschiedener Positionen des Schiebers 5 auf einer Gesamtstrecke 14.

In **Fig. 2a** ist der grundsätzliche Aufbau des Parkventils 1 gezeigt. Das Parkventil 1 weist ein Gehäuse 2 mit einem Anschluss 2a auf, der mit der Lösekammer eines Federspeicher-Bremszylinders 3 verbunden ist. Ferner sind an dem Gehäuse 2 ein Anschluss 2b, der mit einem Vorratsluftbehälter 4 verbunden ist, und ein Entlüftungsanschluss 2c, der mit der Atmosphäre oder einer Entlüftungseinrichtung in Verbindung steht, vorgesehen.

Der Federspeicher-Bremszylinder 3 ist dabei so ausgebildet, dass er, wenn seine Lösekammer mit ausreichend Druckluft beaufschlagt ist, eine Bremse löst und diese anlegt, wenn die Druckluft aus der Lösekammer abgelassen wird. Das Anlegen der Bremse erfolgt dabei üblicherweise durch eine Kraft einer Feder, die einen entsprechenden Kolben innerhalb des Federspeicher-Bremszylinders 3 verschiebt. In der gelösten Stellung ist dabei die Federkraft durch den Druck in der Lösekammer überwunden.

Diese Konfiguration gilt ebenso für die Fig. 2b bis 2d, es wurde jedoch aus Gründen der Übersichtlichkeit auf die weitere Darstellung des Federspeicher-Bremszylinders 3 sowie des Vorratsluftbehälters 4 verzichtet.

Ferner weist das Parkventil 1 einen Schieber 5 auf, welcher auf seinem Umfang Dichtungen 6, 7 trägt. Diese Dichtungen 6, 7 bilden mit dem Gehäuse 2 eine Belüftungskammer 8 und eine Entlüftungskammer 9. Die Belüftungskammer 8 steht dabei in der gezeigten Stellung mit den Anschlüssen 2a, 2b in Verbindung, die Entlüftungskammer 9 steht mit dem Entlüftungsanschluss 2c in Verbindung.

Der Schieber 5 selbst ist entlang seiner Achse über eine Gesamtstrecke 14 nach links verschiebbar vorgesehen, wobei er zur manuellen Betätigung ausgebildet ist. Dazu weist das linke Ende des Schiebers 5, das aus dem Gehäuse 2 ragt, den Schieberknopf 5a auf.

Ferner ist eine Hemmvorrichtung 10 als gestrichelter Bereich gezeigt, welche dazu ausgebildet ist, den Schieber 5 beim Verschieben zumindest entlang einer Teilstrecke 12 der Gesamtstrecke 14 in zumindest einer Richtung mit einer von der Position des Schiebers 5 auf der Teilstrecke 12 abhängigen veränderlichen Gegenkraft F_{H} (siehe Fig. 2b) zu beaufschlagen.

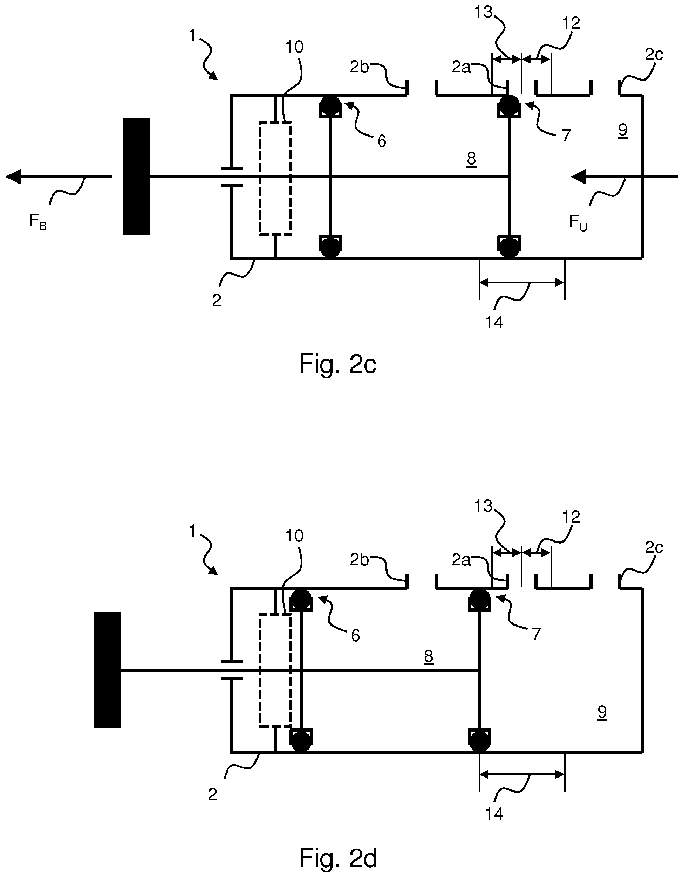

Zusätzlich ist die Hemmvorrichtung 10 dazu ausgebildet, den Schieber 5 beim Durchfahren eines Streckenabschnittes 13 mit einer Unterstützungskraft F_{U} (siehe Fig. 2c) zu beaufschlagen.

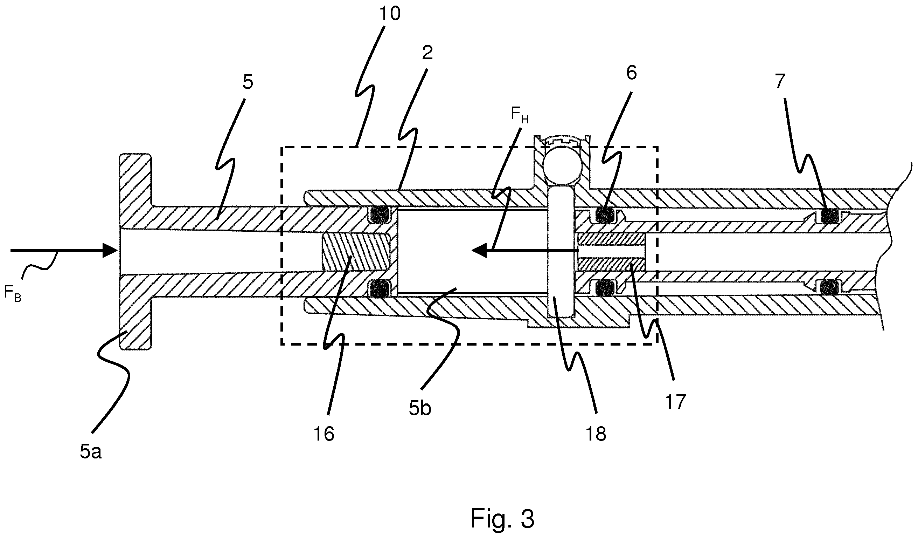

Die gezeigte Hemmvorrichtung 10 ist lediglich beispielhaft an der Stelle zwischen Schieberknopf 5a und Dichtung 6 angeordnet. Sie kann jedoch auch an beliebigen anderen Stellen angeordnet sein, um den Schieber 5 mit der Gegenkraft F_{H} zu beaufschlagen. Weiterhin ist die Hemmvorrichtung 10 hier als fest mit dem Gehäuse 2 verbunden dargestellt. Dies ist ebenfalls nicht zwingend für die Ausbildung der Hemmvorrichtung 10 nötig. Insbesondere die Wirkung der Hemmvorrichtung 10 auf den Schieber 5 kann auch aus dem Zusammenwirken einzelner, die Hemmvorrichtung 10 ausbildende Elemente erfolgen, wie in den Fig. 3 bis 6 gezeigt wird.

Der beschriebene Aufbau entspricht auch dem Aufbau der in den Fig. 2b bis 2d gezeigt ist. Somit wird nachfolgend auf die Funktionsweise des Parkventils 1 eingegangen:
In Fig. 2a befindet sich der Schieber 5 in der Stellung "Fahren", die beispielsweise durch einen Anschlag (nicht gezeigt) im Gehäuse definiert ist, in der er in das Gehäuse 2 hinein gedrückt ist. In dieser Stellung besteht eine fluidische Verbindung zwischen dem Vorratsluftbehälter 4 und der Lösekammer des Federspeicher-Bremszylinders 3 über den Anschluss 2b, die Belüftungskammer 8 und den Anschluss 2a. Die Belüftungskammer 8 ist dabei durch die Dichtungen 6 und 7 zur Entlüftungskammer 9 und dem Rest des Gehäuses 2 abgedichtet. Somit kann in der Lösekammer des Federspeicher-Bremszylinders 3 ein Druck aufgebaut werden, der der Feder des Federspeicher-Bremszylinders 3 entgegenwirkt und somit die Bremse löst und in gelöstem Zustand hält.

Soll nun das Parkventil 1 in den Zustand "Parken" überführt werden, muss der Schieber 5 ausgehend von der Stellung, die in Fig. 2a gezeigt ist, die Gesamtstrecke 14 durchfahren, wobei er in die in Fig. 2d gezeigte Stellung überführt wird. Auf diese Weise wird der Anschluss 2a über die Entlüftungskammer 9 beispielsweise mit der Atmosphäre verbunden, wodurch sich der Druck in der Lösekammer abbaut und die Bremse durch den Federspeicher-Bremszylinder 3 angelegt wird. Dabei ist sicherzustellen, dass der Schieber sicher von der Stellung "Fahren" in die Stellung "Parken" und umgekehrt überführt wird, ohne dass der Schieber 5 in einer Zwitterstellung innerhalb des Gehäuses 2 zur Ruhe kommt.

Eine Zwitterstellung ist dabei als eine Stellung des Schiebers 5 definiert, in der durch den Schieber 5, insbesondere durch die darauf befindlichen Dichtungen 6, 7, keine klare Trennung der einzelnen Anschlüsse 2a, 2b, 2c existiert. Dies ist beispielsweise der Fall, wenn sich die Dichtung 7 so über dem Anschluss 2a befindet, dass sowohl ein Überströmen von Druckluft aus der Belüftungskammer 8 in den Anschluss 2a als auch in die Entlüftungskammer 9 und somit in die Atmosphäre über den Entlüftungsanschluss 2c möglich ist. In dieser Stellung ist das Parkventil 1 in einem undefinierten Zustand.

Um derartige Zwitterstellungen zu vermeiden, ist die Hemmvorrichtung 10 vorgesehen, deren Funktionsweise nachfolgend erläutert wird:
Eine erste Stellung des Schiebers 5 beim Durchfahren der Gesamtstrecke 14 innerhalb des Gehäuses 2 ist in **Fig. 2b** gezeigt. Dort wird eine Betätigungskraft F_{B} nach links beispielsweise durch einen Bediener auf den Schieberknopf 5a ausgeübt, die den Schieber 5 entlang der Gesamtstrecke 14 verschiebt. Ihr entgegen wirkt entlang einer Teilstrecke 12 der Gesamtstrecke 14 eine Gegenkraft F_{H}, die durch die Hemmvorrichtung 10 hervorgerufen wird. In der gezeigten Ausführungsform ist die Teilstrecke 12 dabei so angeordnet, dass sichergestellt ist, dass der Schieber 5 die Gegenkraft F_{H} bis zur Hälfte der Breite des Anschlusses 2a erfährt. So ist sichergestellt, dass bei plötzlichem Einbruch oder kompletten Ausfall der Betätigungskraft F_{B}, beispielsweise weil der Bediener den Schieberknopf 5a losgelassen hat, der Schieber 5 wieder durch die Gegenkraft F_{H} zurück nach rechts in die Stellung "Fahren" bewegt wird. Dabei ist die Erstreckung der Teilstrecke 12 lediglich beispielhaft gewählt. Bei der Auslegung spezieller Ausführungsformen können dem Fachmann auch eine größere oder kleinere Erstreckung bzw. andere Positionen der Teilstrecke 12 auf der Gesamtstrecke 14 sinnvoll erscheinen.

In der gezeigten Position des Schiebers 5 hat die Dichtung 7 die rechte Kante des Anschlusses 2a erreicht. Bei einer weiteren Verschiebung nach links über diesen Punkt hinaus verliert sie ihre Dichtwirkung zur Entlüftungskammer 9. Die aus der Lösekammer des Federspeicher-Bremszylinders 3 strömende Luft kann somit in die Entlüftungskammer 9 und weiter durch den Entlüftungsanschluss 2c aus dem Parkventil 1 strömen.

Die Folge ist ein nachlassender Druck im Federspeicher-Bremszylinder 3, wodurch die Federkraft im Federspeicher-Bremszylinder 3 die Druckkraft in der Lösekammer übersteigt, wodurch die Bremse angelegt wird. Jedoch befindet sich der Schieber 5 in dieser Position nicht in einem definierten Endzustand, da durch den Anschluss 2a Luft aus der Belüftungskammer 8 sowohl in die Lösekammer des Federspeicher-Bremszylinders 3 als auch in die Entlüftungskammer 9 strömen kann.

Daher muss der Schieber 5, wie in **Fig. 2c** gezeigt, noch mindestens über einen Streckenabschnitt 13, der neben der Teilstrecke 12 ein weiterer Teil der Gesamtstrecke 14 ist, bewegt werden. Dazu wird weiterhin die Betätigungskraft F_{B} durch den Bediener auf den Schieberknopf 5a ausgeübt.

In diesem Ausführungsbeispiel ist die Hemmvorrichtung 10 dazu ausgebildet, dem Schieber 5 über dem Streckenabschnitt 13 eine Unterstützungskraft F_{U} aufzuprägen, die in der gleichen Richtung wie die Betätigungskraft F_{B} auf den Schieber 5 wirkt.

Dadurch wird die Bewegung des Schiebers 5 nach links mit einer zusätzlichen Kraft unterstützt, so dass die Wahrscheinlichkeit erhöht wird, dass die Dichtung 7 zumindest die linke Kante des Anschlusses 2a erreicht und/oder überfährt, wodurch sich das Parkventil 1 wieder in einem definierten Zustand befindet. Da die Belüftungskammer 8 durch die Dichtung 7 wieder vollständig zur Entlüftungskammer 9 abgedichtet ist.

Nun steht somit nur noch die Lösekammer des Federspeicher-Bremszylinders 3 über die Entlüftungskammer 9 mit der Atmosphäre in Verbindung. Die Lösekammer kann weiter entlüften, wohingegen die Belüftungskammer 8 und insbesondere der Vorratsluftbehälter 4 nicht mehr weiter an die Atmosphäre entlüften können.

Die Erstreckung des Streckenabschnitts 13 ist lediglich beispielhaft gewählt. Bei der Auslegung spezieller Ausführungsformen können dem Fachmann auch eine größere oder kleinere Erstreckung bzw. andere Positionen des Streckenabschnitts 13 auf der Gesamtstrecke 14 sinnvoll erscheinen.

Zudem ist das Aufbringen einer Unterstützungskraft F_{U} auf den Schieber 5 durch die Hemmvorrichtung 10 nicht zwingend erforderlich. Es stellt lediglich eine vorteilhafte Weiterbildung der Erfindung dar. Anstelle der Unterstützungskraft F_{U} kann auch keine Kraft durch die Hemmvorrichtung 10 auf den Schieber 5 ausgeübt werden.

Der Schieber 5 wird im weiteren Verlauf der Betätigung durch den Bediener in die Endposition der Gesamtstrecke 14 überführt, die durch einen Anschlag (nicht gezeigt) im Gehäuse 2 definiert ist. Diese Stellung des Schiebers 5 ist in **Fig 2d** abgebildet. Die Belüftungskammer 8 ist von der Atmosphäre und dem Anschluss 2a zur Lösekammer des Federspeicher-Bremszylinders 3 getrennt. Die Lösekammer des Federspeicher-Bremszylinders 3 entlüftet über die Entlüftungskammer 9 an die Atmosphäre.

Um die Bremse wiederum zu lösen, muss der Schieber 5 ausgehend von der Stellung in Fig. 2d wieder entlang der Gesamtstrecke 14 in das Gehäuse 2 hineingedrückt werden und in die Stellung in Fig. 2a überführt werden. In dieser Ausführungsform ist die Hemmvorrichtung 10 dazu ausgebildet, nun eine Gegenkraft auf den Schieber 5 nach links zumindest beim Durchfahren des Streckenabschnitts 13 und anschließend eine Unterstützungskraft auf den Schieber 5 nach rechts beim Durchfahren der Teilstrecke 12 auszuüben. Beim Durchfahren von Teilstrecke 12 und Streckenabschnitt 13 in der entgegengesetzten Richtung sind nun die Kraftwirkungen auf den Schieber 5 umgekehrt. Nun wird er auf dem Streckenabschnitt 13 mit einer Kraft entgegen seiner Bewegungsrichtung und auf der Teilstrecke 12 mit einer Unterstützungskraft beaufschlagt.

Die **Fig. 3** bis **6** veranschaulichen zwei unterschiedliche Ausführungsformen zur Ausbildung der Hemmvorrichtung 10. Es sei an dieser Stelle darauf hingewiesen, dass in diesen Figuren die Anschlüsse 2a bis 2c und weitere konstruktive Details des Parkventils 1 nicht abgebildet sind, da ausschließlich auf die Ausbildung der Hemmvorrichtung 10 eingegangen werden soll. Im Gegensatz zu den Fig. 2a bis 2d ist hier die Überführung von der Stellung "Parken" in die Stellung "Fahren" gezeigt.

**Fig. 3** zeigt eine Schnittansicht einer ersten Ausführungsform der Hemmvorrichtung 10. Der Schieber 5 befindet sich dabei in der Stellung "Parken". Die Hemmvorrichtung 10 ist mittels eines gestrichelten Rahmens kenntlich gemacht. Sie weist dabei zwei Magnete 16, 17 auf, die in dieser Ausführungsform innerhalb des Schiebers 5 vorgesehen sind. Zwischen den Magneten 16, 17 weist der Schieber 5 eine Aussparung 5b in Form eines Langloches auf, in der sich ein Gegenstück 18 in Form eines Stiftes befindet, das fest in dem Gehäuse 2 vorgesehen ist. Durch die Aussparung 5b kann der Schieber 5 an dem feststehenden Gegenstück 18 vorbei bewegt werden, ohne dass dieses die Bewegung behindert.

Die Wirkweise der Hemmvorrichtung 10 beruht auf der Anziehungskraft zwischen den Magneten 16, 17 und dem Gegenstück 18 zur Erzeugung der Gegenkraft F_{H} und der Unterstützungskraft F_{U}. Dabei ist das Gegenstück 18 beispielsweise aus einem ferromagnetischen Material ausgebildet, um von den Magneten 16, 17 angezogen werden zu können.

In der gezeigten Stellung des Schiebers 5 in Fig 3 ist der Abstand zwischen dem Magnet 17 und dem Gegenstück 18 minimal. Da sich der Schieber 5 in der Stellung "Parken" befindet, ist dieser ganz aus dem Gehäuse 2 herausgezogen.

Soll nun der Schieber 5 in die Stellung "Fahren" überführt werden, muss er durch einen Bediener in das Gehäuse 2 mittels Aufbringen einer Betätigungskraft F_{B} nach rechts hineingedrückt werden. Dabei muss der Bediener zunächst die magnetische Anziehungskraft zwischen dem Magnet 17 und dem Gegenstück 18 überwinden. Je weiter sich Magnet 17 und Gegenstück 18 danach voneinander entfernen, desto geringer wird die magnetische Anziehungskraft zwischen beiden.

Gleichzeitig wird bei dieser Bewegung der Abstand zwischen dem Magnet 16 und dem Gegenstück 18 geringer, was zur Folge hat, dass die Anziehungskraft zwischen diesen beiden Elementen ansteigt.

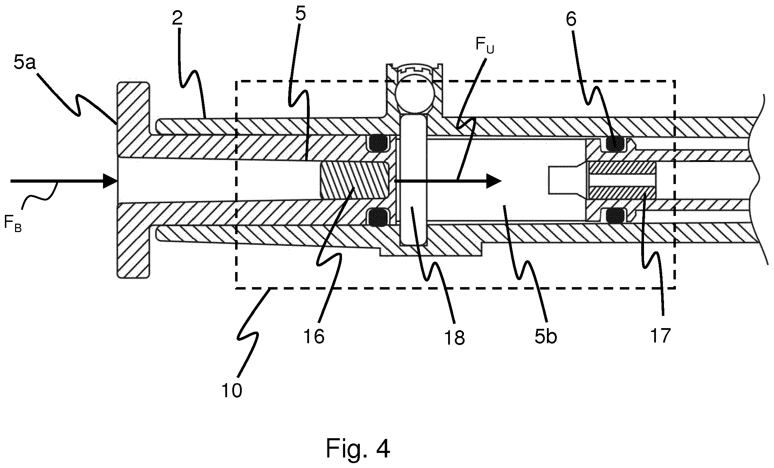

Im Verlauf der Bewegung des Schiebers 5 wird somit eine Schieberstellung erreicht, an der sich die Anziehungskräfte der Magneten 16 und 17 auf das Gegenstück 18 ausgeglichen haben. Es wirkt somit keine Gegenkraft F_{H} auf den Schieber 5. Wird nun die Bewegung fortgesetzt, so überwiegt im weiteren Verlauf der Bewegung in die Stellung "Fahren" die Anziehungskraft des Magneten 16 auf das Gegenstück 18. Diese wirkt jedoch unterstützend in Richtung der Bewegung des Schiebers 5 nach rechts, wie in Fig. 4 gezeigt, so dass der Schieber 5 zusätzlich zu einer Betätigungskraft F_{B} durch einen Bediener auf den Schieberknopf 5a eine Unterstützungskraft F_{U} erfährt, die ein Überführen in die Stellung "Fahren" begünstigt.

Diese Stellung ist in **Fig. 4** gezeigt. In dieser Stellung ist der Abstand zwischen dem Magnet 16 und dem Gegenstück 18 minimal, so dass die magnetische Anziehungskraft zwischen beiden Elementen maximal wird.

Soll der Schieber 5 nun wieder in die Stellung "Parken" überführt werden, so erzeugt nun der Magnet 16 eine Gegenkraft auf den Schieber 5 und der Magnet 17 wirkt durch seine Anziehungskraft unterstützend.

Die gezeigte Ausführungsform der Hemmvorrichtung 10 übt somit auf den Schieber 5 eine maximale Gegenkraft F_{H} in den beiden gezeigten Endstellungen aus, wenn der Schieber 5 in die jeweils andere Stellung überführt werden soll. Diese Gegenkraft F_{H}, welche eine Kraftschwelle ausbildet, muss zunächst durch einen Bediener überwunden werden, was dazu führt, dass er den Schieber 5 mit einer relativ hohen Betätigungskraft F_{B} in Bewegung versetzt. Sobald diese Gegenkraft F_{H} überwunden ist, nimmt die Gegenkraft F_{H} aufgrund des magnetischen Abstandsgesetzes schnell über der zurückgelegten Strecke des Schiebers 5 ab. Der Bediener kann jedoch die von ihm aufgebrachte Betätigungskraft F_{B} nicht schnell genug reduzieren, so dass er den Schieber 5 mit relativ hoher Betätigungskraft F_{B} in Richtung der jeweils anderen Endstellung beaufschlagt. Schließlich erreicht der Schieber 5 Stellungen, in denen zusätzlich zur Betätigungskraft F_{B} noch in Summe der Kräfte des Hemmelements 10 die Anziehungskraft des zweiten Magneten wirkt, wodurch der Schieber 5 eine Unterstützungskraft F_{U} in Richtung der zweiten Endstellung erfährt. Gegenkraft F_{H} und Unterstützungskraft F_{U} sind somit resultierende Kräfte aus der Summe beider Anziehungskräfte der Magnete 16, 17 und dem Gegenstück 18.

Speziell kann die magnetische Anziehungskraft derart stark gewählt werden, dass ab einer bestimmten Stellung des Schiebers 5 dieser auch bei Wegfall der Betätigungskraft F_{B} in die näher gelegene Endstellung gezogen wird.

Somit kann die Hemmvorrichtung 10 derart ausgebildet werden, dass sie die Bediensicherheit des Parkventils 1, insbesondere des Schiebers 5 erhöht, wobei die Hemmvorrichtung 10 den Schieber 5 derart mit Kräften beaufschlagt, dass dieser sicher in die Endstellungen überführt wird. Dabei kann der Fachmann die Stärke der Magnete 16, 17 auf den speziellen Anwendungsfall abstimmen.

Gleichzeitig ist in den Endstellungen durch die hohe magnetische Anziehungskraft zwischen einem der Magnete 16, 17 und dem Gegenstück 18 zudem eine Rastierung ausbildbar, indem die magnetische Anziehungskraft derart hoch gewählt wird, dass der Schieber 5 auch bei Erschütterungen während der Fahrt oder leichten Berührungen, die noch keine Betätigung darstellen, in seiner aktuellen Stellung verbleibt.

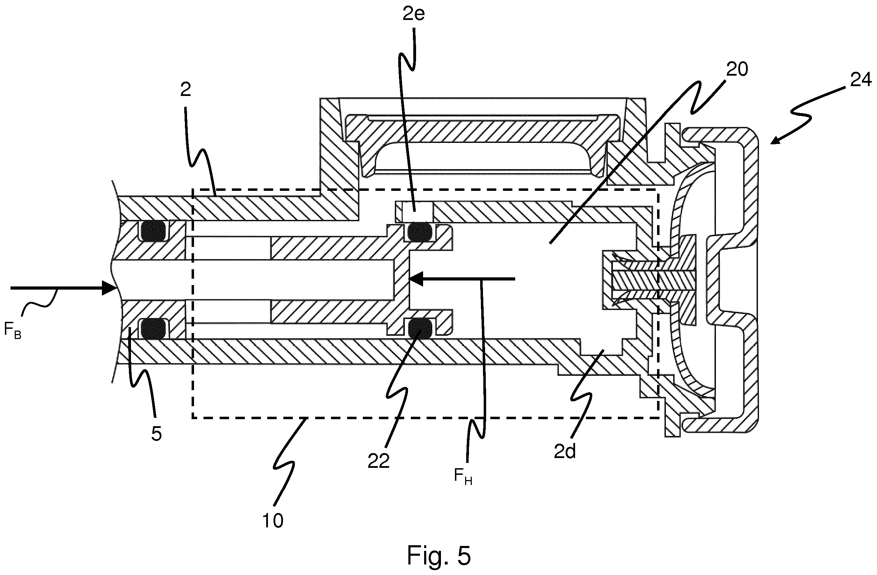

**Fig. 5** zeigt eine Schnittansicht einer weiteren Ausführungsform der Erfindung. Es ist das Ende des Schiebers 5 gezeigt, das nicht aus dem Gehäuse 2 herausragt. Der Schieber 5 befindet sich dabei in der Stellung "Parken". Er ist somit maximal aus dem Gehäuse 2 herausgezogen. Die Hemmvorrichtung 10 ist hier gestrichelt umrandet und durch Teile des Schiebers 5 und des Gehäuses 2 ausgebildet, wie nachfolgend erläutert wird.

Rechts des Schiebers 5 ist eine Kammer 20 im Gehäuse 2 ausgebildet, die auf der linken Seite durch den Schieber 5 und insbesondere durch eine Dichtung 22 auf dem Schieber 5 dichtend verschlossen werden kann. Die Kammer 20 weist einen Ausgleichskanal 2d beispielsweise in Form einer Nut oder eines Sacklochs auf. Ferner ist ein Ausgleichskanal 2e gezeigt, der die Kammer 20 mit einer Entlüftungseinrichtung 24 verbindet. Die Entlüftungseinrichtung 24 weist dabei beispielsweise eine Verbindung zur Atmosphäre auf oder ist als Ausgleichskammer ausgebildet.

Um den Schieber 5 nun in die Stellung "Fahren" zu überführen muss dieser nach rechts in das Gehäuse 2 mittels der Betätigungskraft F_{B} bewegt werden. Dabei überfährt die Dichtung 22 den Ausgleichskanal 2e wodurch die Kammer 20 dichtend verschlossen wird. Die darin eingeschlossene Luft muss im weiteren Verlauf der Bewegung des Schiebers 5 komprimiert werden, so dass in der Kammer 20 ein Überdruck entsteht, der eine Gegenkraft F_{H} auf den Schieber 5 hervorruft, die sich mit fortschreitender Bewegung des Schiebers 5 nach rechts erhöht.

Erreicht die Dichtung 22 den Ausgleichskanal 2d, so kann die komprimierte Luft in der Kammer 20 über den Ausgleichskanal 2d zu der Entlüftungseinrichtung 24 entweichen, wodurch der Überdruck in Kammer 20 ausgeglichen wird und die Gegenkraft verschwindet. Der Schieber 5 befindet sich in der Stellung "Fahren".

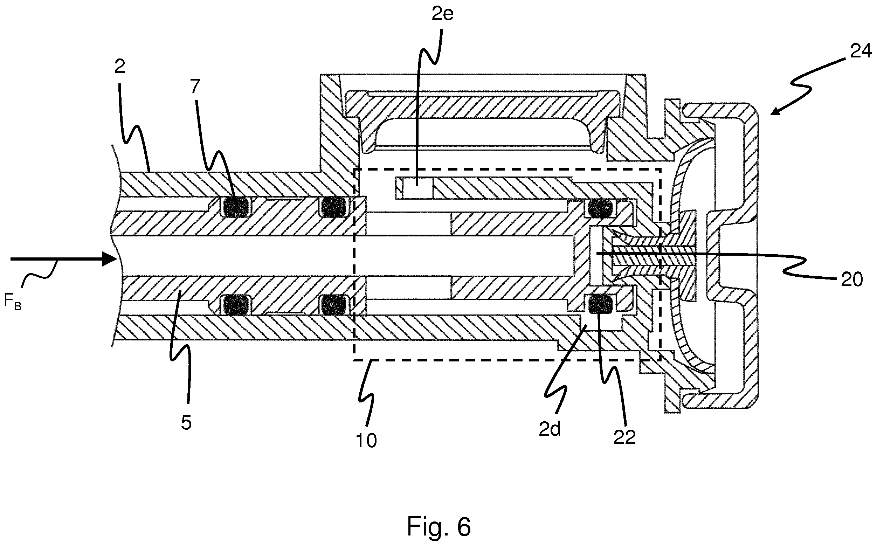

Diese Stellung ist in **Fig. 6** gezeigt. Die Kammer 20 ist dabei auf ein minimales Volumen komprimiert, sie steht jedoch über den Ausgleichskanal 2d mit der Entlüftungseinrichtung 24 in Verbindung, da die Dichtung 22 nicht vollumfänglich mit dem Gehäuse 2 in Kontakt ist und somit die Kammer 20 nicht abdichtet.

Zur Überführung des Parkventils 1 in die Stellung "Parken" muss der Schieber 5 wieder in die in Fig. 5 abgebildete Stellung bewegt werden. Dabei wird in dem Moment, in dem die Dichtung 22 die linke Kante des Ausgleichskanals 2d passiert, die Kammer 20 erneut verschlossen. Die darin eingeschlossene Luft wird durch ein weiteres Verschieben des Schiebers 5 in die gleiche Richtung expandiert, da sich das Volumen der abgeschlossenen Kammer 20 vergrößert. Dadurch baut sich unter dem Schieber 5 in der Kammer 20 ein Unterdruck auf, der den Schieber 5 entgegen der Bewegungsrichtung nach rechts ansaugt und der Verschiebung als Gegenkraft F_{H} entgegenwirkt. Erst wenn die Dichtung 22 den Ausgleichskanals 2e passiert, kann der Unterdruck durch den Ausgleichskanal 2e wieder ausgeglichen werden, da die Kammer 20 wieder mit der Entlüftungseinrichtung 24 verbunden ist. Somit verschwindet auch wieder die Gegenkraft auf den Schieber 5.

Befindet sich der Schieber 5 in der Stellung, in der die Dichtung 22 den Ausgleichskanal 2e überfahren hat, ist die Stellung "Parken" des Schiebers 5 erreicht.

Es sei angemerkt, dass in beiden Endstellungen des Schiebers 5, wie in Fig. 5 und 6 gezeigt, durch das Erzeugen eines Überdrucks bzw. eines Unterdrucks bei Bewegung des Schiebers 5, eine Gegenkraft hervorgerufen wird, die den Schieber 5 bei einem unbeabsichtigten Verschieben in eine Richtung wieder in die Ausgangsposition drückt, solange die Dichtung 22 den entsprechenden Ausgleichskanal 2d, 2e noch nicht überfahren hat, welcher für einen Druckausgleich sorgt. Somit wird der Schieber 5 in den Endstellungen arretiert, oder er weist zumindest eine sehr begrenzte Verschiebbarkeit auf, die jedoch so ausgelegt werden kann, dass keine Zwitterstellungen eingenommen werden können. Somit kann auch eine versehentliche Betätigung des Parkventils 1 weitestgehend ausgeschlossen und eine erhöhte Bediensicherheit erreicht werden. Zudem kann ein Fachmann durch Auslegung der Volumengrenzen die die Kammer 20 einnehmen kann und/oder durch passende Ausgestaltung der Ausgleichskanäle 2d, 2e einen gewünschten Kraftverlauf der Gegenkraft auf den Schieber 5 ausbilden. Zudem ist denkbar, die Ausgleichkanäle 2d, 2e entlang der Bewegungsrichtung des Schiebers 5 so zu erstrecken, dass es Stellungen des Schiebers 5 gibt, in denen in der Kammer 20 weder Über- noch Unterdruck aufgebaut wird, da diese in diesen Stellungen mit der Entlüftungseinrichtung 24 verbunden ist.

Die hier gezeigten Ausführungsformen stellen bevorzugte Ausführungsformen der Erfindung dar und wirken nicht beschränkend auf den Gegenstand der Erfindung. Es sind darüber hinaus weitere Ausführungsformen denkbar, die durch Kombination von Merkmalen der oben beschriebenen Ausführungsformen gebildet werden können. Beispielsweise ist es möglich, eine Hemmvorrichtung auszubilden, die in einer Endstellung des Schiebers 5 den Schieber 5 insbesondere mit einer magnetischen Kraft und in der anderen Endstellung den Schieber 5 mit einer Kraft aus Über- oder Unterdruck beaufschlagt. Auch die Stellungen "Parken" und "Fahren" sind nur beispielhaft wie oben beschrieben gewählt. Die Stellung "Fahren" kann genauso durch die herausgezogene Stellung des Schiebers 5 und die Stellung "Parken" durch die eingefahrene Stellung des Schiebers 5 charakterisiert sein. Darüber hinaus sind beide Stellungen nicht zwingend als Endstellungen des Schiebers 5 auszubilden. Der Schieber 5 kann darüber hinaus weitere Stellungen aufweisen, die ein Bediener anwählen kann, wobei durch die Hemmvorrichtung 10 alternativ oder zusätzlich mittels Kraftbeaufschlagung des Schiebers 5 wie oben beschrieben, eine sichere Überführung des Schiebers 5 in diese Stellungen erreicht werden kann.

### BEZUGSZEICHENLISTE

- 1: Parkventil
- 2: Gehäuse
- 2a: Anschluss
- 2b: Anschluss
- 2c: Entlüftungsanschluss
- 2d: Ausgleichskanal
- 2e: Ausgleichskanal
- 3: Federspeicher-Bremszylinders
- 4: Vorratsluftbehälter
- 5: Schieber
- 5a: Schieberknopf
- 5b: Aussparung
- 6: Dichtung
- 7: Dichtung
- 8: Belüftungskammer
- 9: Entlüftungskammer
- 10: Hemmvorrichtung
- 12: Teilstrecke
- 13: Streckenabschnitt
- 14: Gesamtstrecke
- 16: Magnet
- 17: Magnet
- 18: Gegenstück
- 20: Kammer
- 22: Dichtung
- 24: Entlüftungseinrichtung
- F_{B}: Betätigungskraft
- F_{H}: Gegenkraft
- F_{U}: Unterstützungskraft

## Patentansprüche

1. Parkventil (1) für die manuelle Betätigung einer Federspeicher-Feststellbremse, aufweisend:
- ein Gehäuse (2) mit einem Anschluss (2a), der fluidisch mit einer Lösekammer eines Federspeicher-Bremszylinders (3) verbunden werden kann, einem Anschluss (2b), der fluidisch mit einem Vorratsluftbehälter (4) verbunden werden kann sowie einem Entlüftungsanschluss (2c),
- einen Schieber (5), der zur manuellen Betätigung ausgebildet ist und entlang einer Gesamtstrecke (14) zwischen zwei Endstellungen innerhalb des Gehäuses (2) verschiebbar vorgesehen ist, wobei der Schieber (5) dazu ausgebildet ist, Stellungen entlang der Gesamtstrecke (14) einzunehmen, in denen aufgrund mindestens einer Dichtung (6, 7) keine fluidische Verbindung zwischen dem Anschluss (2a) zur Lösekammer und dem Entlüftungsanschluss (2c) besteht, und andere Stellungen entlang der Gesamtstrecke (14) einzunehmen, in denen aufgrund der mindestens einen Dichtung (6, 7) keine fluidische Verbindung zwischen dem Anschluss (2a) der Lösekammer und dem Anschluss (2b) zum Vorratsluftbehälter (4) besteht,
**gekennzeichnet durch**
- eine Hemmvorrichtung (10), die dazu ausgebildet ist, den Schieber (5) beim Verschieben zumindest entlang einer Teilstrecke (12) der Gesamtstrecke (14) in zumindest einer Richtung mit einer von der Position des Schiebers (5) auf der Teilstrecke (12) abhängigen kontinuierlich veränderlichen Gegenkraft (F_{H}) zu beaufschlagen.

2. Parkventil (1) nach Anspruch 1, wobei
die Teilstrecke (12) zumindest eine Endstellung des Schiebers (5) beinhaltet, und/oder
die Gegenkraft (F_{H}) nicht aufgrund mechanischer Reibung zweier Komponenten erzeugt wird, und/oder
die Hemmvorrichtung (10) eine Rastierung aufweist, die dazu ausgebildet ist, den Schieber (5) zumindest in einer Stellung oder einem beschränkten Bereich der Gesamtstrecke (14) zu halten, und/oder
die mindestens eine Dichtung (6, 7) auf dem Schieber (5) oder im Gehäuse (2) vorgesehen ist.

3. Parkventil (1) nach einem der vorangegangenen Ansprüche, wobei
die Teilstrecke (12) aus mindestens zwei Abschnitten der Gesamtstrecke (14) besteht, die insbesondere nicht direkt aneinander angrenzen.

4. Parkventil (1) nach einem der vorangegangenen Ansprüche, wobei
die Gegenkraft (F_{H}) auf den Schieber (5) einen Maximalwert aufweist, der um mindestens 25%, vorzugsweise um mindestens 50% gegenüber einer Kraft erhöht ist, die der Schieber (5) aufgrund seiner Bauart, insbesondere aufgrund der Reibung der mindestens einen Dichtung (6, 7) im Gehäuse (2), bei einer Verschiebung erfährt.

5. Parkventil (1) nach einem der vorangegangenen Ansprüche, wobei
die Hemmvorrichtung (10) dazu ausgebildet ist, den Schieber (5) über einen Streckenabschnitt (13) der Gesamtstrecke (14), der nicht der Teilstrecke (12) angehört, mit einer insbesondere von der Position des Schiebers (5) auf dem Streckenabschnitt (13) abhängigen Unterstützungskraft (F_{U}) in Richtung der Verschiebung oder keiner Kraft zu beaufschlagen.

6. Parkventil (1) nach Anspruch 5, wobei
die Unterstützungskraft (F_{U}) dazu ausgebildet ist, eine Verschiebung des Schiebers (5) in die Endstellung, die in Richtung der Verschiebung liegt, auch ohne manuelle Betätigung zu bewirken.

7. Parkventil (1) nach einem der vorangegangenen Ansprüche, wobei
die Hemmvorrichtung (10) dazu ausgebildet ist, dass sich die Gegenkraft (F_{H}) und/oder die Unterstützungskraft (F_{U}) von ihrem minimalen bis zu ihrem maximalen Wert über eine Strecke ausbildet, deren Länge insbesondere zumindest 2% der Gesamtstrecke (14), bevorzugt zumindest 5%, besonders bevorzugt zumindest 8% der Gesamtstrecke (14) beträgt.

8. Parkventil (1) nach einem der vorangegangenen Ansprüche, wobei
die Hemmvorrichtung (10) dazu ausgebildet ist, mittels magnetischer Kraft die Gegenkraft (F_{H}) und/oder die Unterstützungskraft (F_{U}) auf den Schieber (5) auszuüben, wobei
die Hemmvorrichtung (10) insbesondere einen Magnet (16) und ein Gegenstück (18), das dazu ausgebildet ist, von dem Magneten (16) angezogen zu werden, aufweist, wobei
das Gegenstück (18) insbesondere ein zweiter Magnet oder ein magnetisches Element ist.

9. Parkventil (1) nach Anspruch 8, wobei
der Magnet (16) auf oder in dem Schieber (5) und das Gegenstück (18) auf oder in dem Gehäuse (2) oder der Magnet (16) auf oder in dem Gehäuse (2) und das Gegenstück (18) auf oder in dem Schieber (5) vorgesehen ist, und/oder
der Magnet (16) und das Gegenstück (18) so angeordnet sind, dass deren Anziehungskraft in einer Endstellung des Schiebers (5) maximal zumindest gegenüber allen weiteren möglichen Stellungen des Schiebers (5) wird.

10. Parkventil (1) nach einem der Ansprüche 8 oder 9, wobei
die Hemmvorrichtung (10) einen weiteren Magnet (17) oder ein weiteres Gegenstück auf oder in dem Gehäuse (2) oder auf oder in dem Schieber (5) aufweist.

11. Parkventil (1) nach einem der vorangegangenen Ansprüche, wobei
die Hemmvorrichtung (10) dazu ausgebildet ist, den Schieber (5) mit einer Gegenkraft (F_{H}) und/oder einer Unterstützungskraft (F_{U}), die aus einem Unter- und/oder einem Überdruck gebildet wird, zu beaufschlagen.

12. Parkventil (1) nach Anspruch 11, wobei
die Hemmvorrichtung (10) eine Kammer (20) aufweist, welche dazu ausgebildet ist, zumindest bei Verschiebung des Schiebers (5) über die Teilstrecke (12) hinweg durch den Schieber (5) und/oder einen Teil des Gehäuses (2) fluidisch verschlossen zu werden, und
die Kammer (20) dazu ausgebildet ist, ihr Volumen entsprechend der Verschiebung des Schiebers (5) zu verändern.

13. Parkventil (1) nach Anspruch 12, wobei
der Verschluss der Kammer (20) mittels einer Dichtung (22) des Schiebers (5) und/oder des Gehäuses (2) und/oder mittels separater, dazu ausgebildeter Elemente erfolgt, und/oder
die Kammer (20) in dem Schieber (5) und/oder dem Gehäuse (2) ausgebildet ist.

14. Parkventil (1) nach Anspruch 12 oder 13, wobei
die Kammer (20) beim Verschieben des Schiebers (5) über die Teilstrecke (12) und/oder den Streckenabschnitt (13) hinaus dazu ausgebildet ist, mit der Atmosphäre oder einer Entlüftungseinrichtung, insbesondere mit einer Ausgleichskammer, verbunden zu werden.

15. Parkventil (1) nach einem der Ansprüche 12 bis 14, wobei
die Kammer (20) beim Verschieben des Schiebers (5) über die Teilstrecke (12) hinweg eine Volumenänderung von mindestens 5%, vorzugsweise mindestens 10% erfährt.

## Claims

1. Parking valve (1) for manually actuating a spring-loaded parking brake, having:
- a housing (2) with a port (2a) that can be fluidically connected to a release chamber of a spring-loaded brake cylinder (3), a port (2b) that can be fluidically connected to an air reservoir (4), and a vent port (2c),
- a slide (5), which is designed for manual actuation and can be moved along an overall path (14) between two end positions inside the housing (2), wherein the slide (5) is designed to assume positions along the overall path (14) in which, as a result of at least one seal (6, 7), there is no fluidic connection between the port (2a) to the release chamber and the vent port (2c), and to assume other positions along the overall path (14) in which, as a result of the at least one seal (6, 7), there is no fluidic connection between the port (2a) of the release chamber and the port (2b) to the air reservoir (4),
**characterised by**
- an inhibiting device (10), which, during movement at least along a partial path (12) of the overall path (14), is designed to act on the slide (5) in at least one direction with a continuously variable counterforce (F_{H}) dependent on the position of the slide (5) on the partial path (12).

2. Parking valve (1) according to claim 1, wherein
the partial path (12) includes at least one end position of the slide (5), and/or
the counterforce (F_{H}) is not produced on the basis of mechanical friction between two components, and/or
the inhibiting device (10) has a latch, which is designed to hold the slide (5) at least in one position or in a limited region of the overall path (14), and/or
the at least one seal (6, 7) is provided on the slide (5) or in the housing (2).

3. Parking valve (1) according to any of the preceding claims, wherein
the partial path (12) consists of at least two sections of the overall path (14) which, in particular, do not adjoin one another directly.

4. Parking valve (1) according to any of the preceding claims, wherein
the counterforce (Fn) on the slide (5) has a maximum value which is increased by at least 25%, preferably by at least 50%, relative to a force to which, owing to the design of the slide (5), in particular owing to the friction of the at least one seal (6, 7) in the housing (2), said slide is subject during a movement.

5. Parking valve (1) according to any of the preceding claims, wherein
the inhibiting device (10) is designed to subject the slide (5), over a path section (13) of the overall path (14) which does not form part of the partial path (12), to an assisting force (Fu), dependent in particular on the position of the slide (5) on the path section (13), in the direction of the movement, or to no force.

6. Parking valve (1) according to claim 5, wherein
the assisting force (Fu) is designed to bring about a movement of the slide (5) into the end position which is in the direction of the movement, even without manual actuation.

7. Parking valve (1) according to any of the preceding claims, wherein
the inhibiting device (10) is designed to ensure that the counterforce (F_{H}) and/or the assisting force (Fu) are/is formed from the minimum to the maximum value thereof over a path whose length is, in particular, at least 2% of the overall path (14), preferably at least 5%, particularly preferably at least 8% of the overall path (14).

8. Parking valve (1) according to any of the preceding claims, wherein
the inhibiting device (10) is designed to exert the counterforce (F_{H}) and/or the assisting force (Fu) on the slide (5) by means of magnetic force, wherein
the inhibiting device (10) has, in particular, a magnet (16) and a counterpart (18), which is designed to be attracted by the magnet (16), wherein
the counterpart (18) is, in particular, a second magnet or a magnetic element.

9. Parking valve (1) according to claim 8, wherein
the magnet (16) is provided on or in the slide (5) and the counterpart (18) is provided on or in the housing (2), or the magnet (16) is provided on or in the housing (2) and the counterpart (18) is provided on or in the slide (5), and/or
the magnet (16) and the counterpart (18) are arranged in such a way that the force of attraction thereof becomes a maximum in one end position of the slide (5), at least relative to all other possible positions of the slide (5).

10. Parking valve (1) according to claim 8 or 9, wherein
the inhibiting device (10) has a further magnet (17) or a further counterpart on or in the housing (2) or on or in the slide (5).

11. Parking valve (1) according to any of the preceding claims, wherein
the inhibiting device (10) is designed to subject the slide (5) to a counterforce (F_{H}) and/or an assisting force (Fu) which is formed by a vacuum or an excess pressure.

12. Parking valve (1) according to claim 11, wherein
the inhibiting device (10) has a chamber (20) which is designed to be fluidically closed by the slide (5) and/or a part of the housing (2), at least when the slide (5) is moved over the partial path (12), and
the chamber (20) is designed to change its volume in accordance with the movement of the slide (5).

13. Parking valve (1) according to claim 12, wherein
the closure of the chamber (20) is accomplished by means of a seal (22) of the slide (5) and/or of the housing (2) and/or by means of separate elements designed for this purpose, and/or
the chamber (20) is formed in the slide (5) and/or the housing (2).

14. Parking valve (1) according to claim 12 or 13, wherein
the chamber (20) is designed to be connected to the atmosphere or to a venting device, in particular an equalisation chamber, when the slide (5) is moved beyond the partial path (12) and/or the path section (13).

15. Parking valve (1) according to any of claims 12 to 14, wherein
the chamber (20) undergoes a change in volume of at least 5%, preferably at least 10%, when the slide (5) is moved over the partial path (12).

## Revendications

1. Soupape (1) de stationnement pour l'actionnement manuel d'un frein de stationnement à ressort accumulateur, comportant :
- un boîtier (2) ayant un raccord (2a), qui peut communiquer fluidiquement avec une chambre de desserrage d'un cylindre (3) de frein à ressort accumulateur, un raccord (2b), qui peut communiquer fluidiquement avec un réservoir (4) d'air, ainsi qu'un raccord (2c) de purge,
- un tiroir (5), qui est constitué pour l'actionnement manuel et qui est prévu coulissant le long d'un chemin (14) total entre deux positions d'extrémité dans le boîtier (2), dans lequel le tiroir (5) est constitué pour prendre des positions le long du chemin (14) total, dans lesquelles, en raison d'au moins un joint (6, 7) d'étanchéité, il n'y a pas de communication fluidique entre le raccord (2a) menant à la chambre de desserrage et le raccord (2c) de purge, et d'autres positions le long du chemin (14) total, dans lesquelles, en raison du au moins un joint (6, 7) d'étanchéité, il n'y a pas de communication fluidique entre le raccord (2a) de la chambre de desserrage et le raccord (2b) menant au réservoir (4) d'air,
**caractérisée par**
- un dispositif (10) de blocage, qui est constitué pour soumettre le tiroir (5), lors du coulissement au moins le long d'un chemin (12) partiel du chemin (14) total dans au moins un sens, à une force (F_{H}) antagoniste variable en continu, en fonction de la position du tiroir (5) sur le chemin (12) partiel.

2. Soupape (1) de stationnement suivant la revendication 1, dans laquelle
le chemin (12) partiel comporte au moins une position d'extrémité du tiroir (5), et/ou
la force (F_{H}) antagoniste n'est pas produite en raison d'un frottement mécanique entre deux composants, et/ou
le dispositif (10) de blocage a un encliquetage, qui est constitué pour maintenir le tiroir (5) au moins dans une position ou dans une partie limitée du chemin (14) total, et/ou
le au moins un joint (6, 7) d'étanchéité est prévu sur le tiroir (5) ou dans le boîtier (2).

3. Soupape (1) de stationnement suivant l'une des revendications précédentes, dans laquelle
le chemin (12) partiel est constitué d'au moins deux tronçons du chemin (14) total qui, en particulier, ne sont pas voisins directement l'un de l'autre.

4. Soupape (1) de stationnement suivant l'une des revendications précédentes, dans laquelle
la force (F_{H}) antagoniste sur le tiroir (5) a une valeur maximum, qui est augmentée d'au moins 25%, de préférence d'au moins 50%, par rapport à une force que le tiroir (5), en raison de son type de construction, notamment en raison du frottement du au moins un joint (6, 7) d'étanchéité du boîtier (2), subit lors d'un coulissement.

5. Soupape (1) de stationnement suivant l'une des revendications précédentes, dans laquelle
le dispositif (10) de blocage est constitué pour que le tiroir (5), sur un tronçon (13) du chemin (14) total, qui n'appartient pas au chemin (12) partiel, ne soit pas soumis à une force ou soit dans le sens du coulissement soumis à une force (F_{U}) de soutien, qui dépend notamment de la position du tiroir (5) sur le tronçon (13) du chemin.

6. Soupape (1) de stationnement suivant la revendication 5, dans laquelle
la force (F_{U}) de soutien est constituée de manière à provoquer un coulissement du tiroir (5) dans la position d'extrémité, qui se trouve dans le sens du coulissement, même sans actionnement manuel.

7. Soupape (1) de stationnement suivant l'une des revendications précédentes, dans laquelle
le dispositif (10) de blocage est constitué de manière à ce que la force (F_{H}) antagoniste et/ou la force (F_{U}) de soutien se constitue de sa valeur minimum à sa valeur maximum sur un chemin, dont la longueur représente notamment au moins 2% du chemin (14) total, de préférence au moins 5%, d'une manière particulièrement préférée au moins 8% du chemin (14) total.

8. Soupape (1) de stationnement suivant l'une des revendications précédentes, dans laquelle
le dispositif (10) de blocage est constitué de manière à exercé sur le tiroir (5) la force (F_{H}) et/ou la force (F_{U}) de soutien au moyen d'une force magnétique, dans laquelle
le dispositif (10) de blocage a notamment un aimant (16) et une pièce (18) antagoniste, qui est constituée pour être attirée par l'aimant (16), dans laquelle
la pièce (18) antagoniste est notamment un deuxième aimant ou un élément magnétique.

9. Soupape (1) de stationnement suivant la revendication 8, dans laquelle
l'aimant (16) est prévu sur ou dans le tiroir (5) et la pièce (18) antagoniste sur ou dans le boîtier (2), ou l'aimant (16) sur ou dans le boîtier (2) et la pièce (18) antagoniste sur ou dans le tiroir (5), et/ou
l'aimant (16) et la pièce (18) antagoniste sont disposés de manière à ce que leur force d'attraction soit maximum, au moins par rapport à toutes les autres positions possibles du tiroir (5), dans une position d'extrémité du tiroir (5).

10. Soupape (1) de stationnement suivant l'une des revendications 8 ou 9, dans laquelle
le dispositif (10) de blocage a un autre aimant (17) ou une autre pièce antagoniste sur ou dans le boîtier (2), ou sur ou dans le tiroir (5).

11. Soupape (1) de stationnement suivant l'une des revendications précédentes, dans laquelle
le dispositif (10) de blocage est constitué pour soumettre le tiroir (5) à une force (F_{H}) antagoniste et/ou à une force (F_{U}) de soutien, qui est formée d'une dépression et/ou d'une surpression.

12. Soupape (1) de stationnement suivant la revendication 11, dans laquelle
le dispositif (10) de blocage a une chambre (20), qui est constituée pour être, au moins lors du coulissement du tiroir (5) au-delà du chemin (12) partiel, fermée par le tiroir (5) et/ou une partie du boîtier (2), et
la chambre (20) est constituée pour modifier son volume, conformément au coulissement du tiroir (5).

13. Soupape (1) de stationnement suivant la revendication 12, dans laquelle
la fermeture de la chambre (20) s'effectue au moyen d'un joint (22) d'étanchéité du tiroir (5) et/ou du boîtier (2) et/ou au moyen d'éléments distincts constitués à cet effet, et/ou
la chambre (20) est constituée dans le tiroir (5) et/ou le boîtier (2).

14. Soupape (1) de stationnement suivant la revendication 12 ou 13, dans laquelle
la chambre (20) est, lors du coulissement du tiroir (5) au-delà du chemin (12) partiel et/ou du tronçon (13) du chemin, constituée pour communiquer avec l'atmosphère ou avec un dispositif de purge, notamment avec une chambre de compensation.

15. Soupape (1) de stationnement suivant l'une des revendications 12 à 14, dans laquelle
la chambre (20) subit, lors du coulissement du tiroir (5) au-delà du chemin (12) partiel, une variation de volume d'au moins 5%, de préférence d'au moins 10%.
